# EUROPEAN PATENT SPECIFICATION

(11) **EP 4 232 723 B1**
(45) Date of publication and mention of the grant of the patent: **12.03.2025**
(21) Application number: 21881382.2
(22) Date of filing: 21.10.2021
(51) Int. Cl.: F16B 29/00, F16B 31/02, F16B 37/00

(54) **A DEVICE AND METHOD FOR DETERMINING AMOUNT OF FORCE APPLICATION IN FASTENING COMPONENTS**
VORRICHTUNG UND VERFAHREN ZUR BESTIMMUNG DER KRAFTANWENDUNGSMENGE BEI BEFESTIGUNGSKOMPONENTEN
DISPOSITIF ET PROCÉDÉ POUR DÉTERMINER LA QUANTITÉ D'APPLICATION DE FORCE DANS DES COMPOSANTS DE FIXATION

(30) Priority: 21.10.2020 US 202063094810 P
(43) Date of publication of application: 30.08.2023
(73) Proprietor: Nord-Lock Switzerland GmbH, 8735 St. Gallenkappel (CH)
(72) Inventor: THOMAS, Damien Jean François, Red Hill, Queensland 4059 (AU); KELLNER, Pierre Henrik Sven, Red Hill, Queensland 4059 (AU); BUSALACCHI, Stephen John, Red Hill, Queensland 4059 (AU)
(74) Representative: Barker Brettell LLP
(86) International application number: PCT/AU2021/051228
(87) International publication number: WO 2022/082269

(56) References cited:
- WO-A1-2015/170842
- FR-A1- 3 106 634
- JP-A- 2006 275 796
- US-A- 2 870 668
- US-A- 4 846 614
- US-A1- 2006 225 511
- US-A1- 2008 253 858
- US-A1- 2010 054 891
- US-A1- 2015 337 884
- US-A1- 2018 149 534
- US-A1- 2019 203 758
- US-B2- 10 768 062

## Description

### FIELD OF THE INVENTION

The present invention relates to the field of fastening. More particularly, the present invention relates to the field of fastening components. Even more particularly, the invention relates to devices for determining the amount of force being applied.

### BACKGROUND TO THE INVENTION

Any reference to background art herein is not to be construed as an admission that such art constitutes common general knowledge in Australia or elsewhere.

Fastening workpieces is important to many different industries. Typically, fastening two or more workpieces require force to apply axial pressure thereto. However, over-application of force can result in buckling of the fastener and thus lead to the workpieces disengaging. Alternatively, under-application of force can similarly lead an ineffective or failed connection.

It would be advantageous to provide a method and/or a device for determining the axial pressure applied by a fastening member so that the amount of applied force can be to be monitored to alleviate the problem of over-tensioning or under-tensioning. Furthermore, it would be advantageous to monitor the amount of force being applied over time as this would provide an indication as to whether tension is being lost.

US patent application No. 2015/0337884 relates to a load indicating device that comprises a body having an adjustment means (in the form of an adjustment screw) that is aligned substantially parallel to the axis of the bore. The adjustment screw acts on a movable member via a resilient means (e.g, spring clip) such that the movable member produces a detectable and measurable displacement when compression in applied.

One problem associated with many of the presently available solutions is that they are only compatible with certain types of fastening methodologies.

It will be appreciated that it would be advantageous to address one or more of the above issues or to at least provide the consumer with a commercial alternative.

### SUMMARY OF THE INVENTION

In a first aspect, although it need not be the only or indeed the broadest aspect, the invention broadly resides in a nut device comprising:
a body comprising a first surface and second surface connected by an outer wall and by a central threaded aperture with female threads for engaging an elongate fastening member; and
a deformation measurement device being received or formed with the body.

In an embodiment, the second surface comprises a relief area.

In one embodiment, the invention resides in a nut device comprising:
a body comprising a first surface and second surface connected by an outer wall and by a central threaded aperture with female threads for engaging an elongate fastening member; and
a deformation measurement device being received or formed with the body,
wherein the second surface comprises a relief area.

In one embodiment, the relief area extends at least partially from the outer wall to the central treaded aperture. In one embodiment, the relief area extends from the outer wall to the central treaded aperture. In one embodiment, the relief area has a frustoconical shape.

In another embodiment, the second surface is substantially planar.

In an embodiment, the outer wall comprises an enlarged flange portion adjacent the second surface. In one embodiment, the outer wall further comprises an axially remote portion adjacent the first surface. In a further embodiment, the enlarged flange portion and the axially remote portion are connected by a transitional surface. In some embodiments, the axially remote portion is formed as a nut.

In some embodiments, the outer wall comprises an indent that receives the deformation measurement device. In one embodiment, the enlarged flange portion comprises the indent.

In embodiments, the deformation measurement device is formed with the body. In one embodiment, the deformation measurement device is formed with the periphery of the body. In one embodiment, the deformation measurement device is formed with the enlarged flange portion. In one embodiment, the nut device is provided in combination with the elongate fastening member. In one embodiment, the deformation measurement device is a strain gauge.

In one embodiment, the female threads have a first uniform pitch. In an embodiment, the elongate fastening member comprises a male threaded portion. In one embodiment, the female threads are adapted to cooperate with male threads of the male threaded portion. In one embodiment, the male threads may have a second uniform pitch. The second uniform pitch may be different from the first uniform pitch.

In second aspect, the invention resides in a fastening assembly for determining an applied load comprising:
a fastener comprising an elongate fastening member having a male threaded distal end; and
a nut device having a body comprising a first surface and second surface connected by an outer wall and by a central threaded aperture with female threads for engaging the elongate fastening member, and a deformation measurement device adapted to measure deformation of the body and determine the load applied, the deformation measurement device being received or formed with the body;
whereby tensioning of the fastener causes the deformation of the body.

The nut device, fastener and components thereof may be as substantially described as for the first aspect.

In an embodiment, the second surface comprises a relief area. In another embodiment, the second surface is substantially planar.

In one embodiment, the fastener comprises a multi jackbolt tensioner. In one embodiment, the fastener comprises a nut. In one embodiment, the fastener comprises a body portion integrally formed with a proximal end of the elongate fastening member. In another embodiment, the fastener comprises a body portion that engages a proximal end of the elongate fastening member.

In an aspect, the invention resides in a method of determining a load applied to a fastening assembly comprising a fastener and a nut device, the method including:
providing a fastener comprising an elongate fastening member having a male threaded distal end;
fixing the nut device to the male threaded distal end, wherein the nut device having a body comprising a first surface and second surface connected by an outer wall and by a central threaded aperture with female threads, and a deformation measurement device being received or formed with the body;
optionally, locating the deformation measurement device around the body; and
tensioning the fastener and/or nut device;
determining the load applied to the elongate fastening member by:
   measuring deformation of the nut device transversely to an axial direction of the elongate fastening member, and
   determining the load applied to the elongate fastening member from the deformation of the nut device.

The nut device, fastener and components thereof may be as substantially described as for the first aspect and the second aspect.

In an embodiment, the second surface comprises a relief area. In another embodiment, the second surface is substantially planar.

In one embodiment, the method further includes the step of locating a load bearing member adjacent the second surface.

In one embodiment, the deformation of the body is measured at at least one predefined axial position on the outer surface.

In one embodiment, the method further includes the step of inserting the elongate fastening member in an aperture of a workpiece. In an embodiment, the method further includes the step of inserting the elongate fastening member in aligned apertures of two or more workpiece(s).

In one embodiment, tensioning of the fastener occurs at the end opposite a location of the nut device.

In one embodiment, the body comprises an indent adapted to receive the deformation measurement device. In an embodiment, the deformation measurement device is formed with the body.

The various features and embodiments of the present invention referred to in the individual sections above and in the description which follows apply, as appropriate, to other sections, *mutatis mutandis.* Consequently features specified in one section may be combined with features specified in other sections as appropriate.

Further features and advantages of the present invention will become apparent from the following detailed description.

### BRIEF DESCRIPTION OF THE DRAWINGS

To assist in understanding the invention and to enable a person skilled in the art to put the invention into practical effect, embodiments of the invention will be described by way of example only with reference to the accompanying drawings, in which:
FIG 1 shows a cross section of an embodiment of the present nut device;
FIG 1a shows a perspective view of the nut device of FIG 1 without the strain gauge;
FIG 2 shows a cross section of similar embodiment of the nut device of FIG 1;
FIG 2a shows a perspective view of the nut device of FIG 2 without the strain gauge;
FIG 3 shows a cross section of another embodiment of the present nut device, and the function thereof;
FIG 4 shows the nut device of FIG 3 in conjunction with a multi jackbolt tensioner (MJT);
FIG 5 shows the nut device of FIG 3 in conjunction with a nut fastener;
FIG 6 shows an example of a bolt-style MJT comprising a strain gauge;
FIG 7 shows an example of another bolt-style MJT comprising a strain gauge;
FIG 8 shows an example of an alternative bolt-style MJT comprising a strain gauge;
FIG 9 shows an example of a nut style MJT comprising a strain gauge
FIG 10 shows a cross section of an embodiment of a nut device without the strain gauge;
FIG 10a shows a perspective view of the nut device of FIG 10;
FIG 11 shows a cross section of an embodiment of a nut device with the strain gauge;
FIG 11a shows a perspective view of the nut device of FIG 11;
FIG 12 shows a cross section of an embodiment of a nut device with the strain gauge;
FIG 12a shows a perspective view of the nut device of FIG 12; and
FIG 13 shows an example of the correlation between the circumferential expansion of the nut body vs the axial force on the bolt.

### DETAILED DESCRIPTION OF THE INVENTION

Embodiments of the present invention reside primarily in a nut device. Accordingly, the device and method steps have been illustrated in concise schematic form in the drawings, showing only those specific details that are necessary for understanding the embodiments of the present invention so as to not obscure the disclosure with excessive detail that will be readily apparent to those of ordinary skill in the art having the benefit of the present description.

In this specification, adjectives such as first and second, top and bottom, and the like may be used solely to distinguish one element or action from another element or action without necessarily requiring or implying any actual such relationship or order.

Words such as "comprises" or "includes" are intended to define a non-exclusive inclusion, such that a process, method, device, or apparatus that comprises a list of elements does not include only those elements but may include other elements not expressly listed, including elements that are inherent to such a process, method, device, or apparatus.

As used herein, the term 'about' means the amount is nominally the number following the term 'about' but the actual amount may vary from this precise number to an unimportant degree.

In a first aspect, although it need not be the only or indeed the broadest aspect, the invention resides in a nut device 100, 200 comprising:
a body 110, 210 comprising a first surface 112, 212 and second surface 114, 214 connected by an outer wall 116, 216 and by a central threaded aperture 119, 219 having with female threads 118, 218 for engaging an elongate fastener; and
a deformation measurement device being received or formed with the body 110, 210.

In an embodiment, the second surface 114, 214 comprises a relief area 114a, 214a. It will be appreciated that the relief area provides further advantages (mentioned hereinbelow) but is not essential to the present invention. In this regard, the second surface is suitably a substantially flat or planar surface. In an embodiment the second surface is a planar surface connecting the outer wall to the female threads of the aperture.

For ease of description, the deformation measurement device has been described in relation to a strain gauge. However, the person skilled in the art will appreciate that any device that is capable of measuring and detecting deformation may be utilized with the present invention. Non-limiting examples of the deformation measurement device include linear variable differential transformer sensors, capacitive sensors, ultrasonic sensors, light emitting devices and fibre optic sensors. A non-limiting example of the light emitting device is a laser. Another non-limiting example of the deformation measurement device is a pin gage or plug gage.

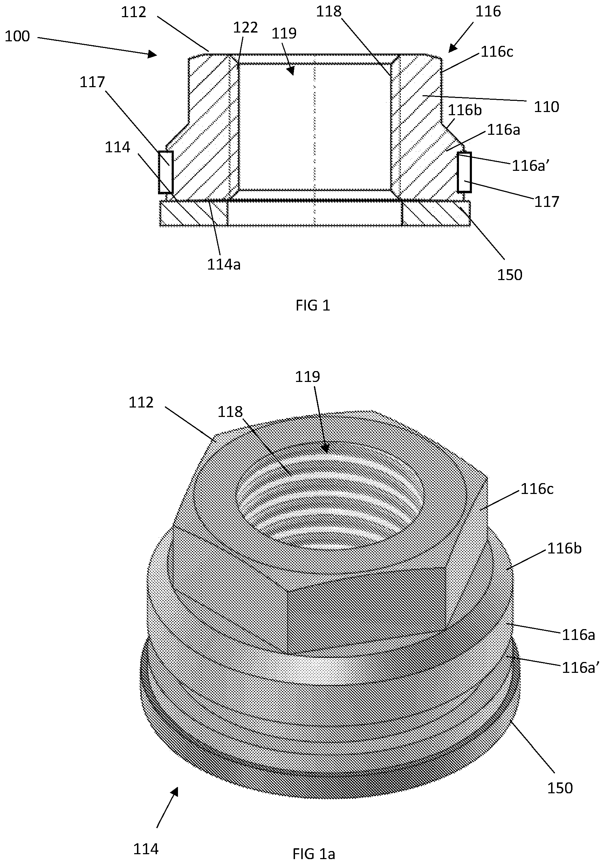

Shown in FIG 1 is an embodiment of a nut device 100 of the present invention. Nut device 100 comprises a body 110. The body 110 comprises a first surface 112 and second surface 114 connected by an outer wall 116 and by a central threaded aperture 119 having female threads 118. That is, the first surface 112 and the second surface 114 are connected by the outer wall 116 and the female threads 118. The central threaded aperture 119 is centrally disposed in the body 110. In use, the second surface 114 abuts the workpiece to be fastened or a load bearing member 150 therebetween. The second surface 114 comprises a relief area 114a that extends from the outer wall 116 to the central threaded aperture 119. In this regard, the relief area 114a extends at least partially from the outer wall 116 to the central threaded aperture 119. That is, relative to a plane joining the junctions of the outer wall 116 and the second surface 114, the relief area 114a defines a void between the body 110 and the load bearing member 150 or workpiece (if a load bearing member is not present).

In one embodiment, the central threaded aperture may be in the form of a blind hole. That is, the aperture does not extend completely from the second surface to the first surface such that the second surface 112 is complete.

The relief area 114a may be defined by a surface that extends from the junction of the outer wall 116 and the second surface 114 to the junction of the central threaded aperture 119 and the second surface 114. In the embodiment shown, the relief area 114a is defined by a frustoconical shape. This frustoconical shaped relief area results in less initial contact between the second surface 114 and load bearing member 150 or workpiece, and this advantageously alleviates the problem of buckling.

In the embodiment shown, the outer wall 116 comprises an enlarged flanged portion 116a and an axially remote portion 116c. The enlarged flange portion 116a may be adjacent the second surface 114. The axially remote portion 116c may be adjacent the first surface 112. In one embodiment, the axially remote portion 116c is formed with polygonal sides, for example as a hex nut for gripping by a tool. The enlarged flange portion 116a may be connected to the axially remote portion 116c by a transitional surface 116b. In one embodiment, the transitional surface 116b is a frustoconical transitional surface. In one embodiment, the outer wall 116 is circular in shape. In an embodiment, the enlarged flange portion 116a has a larger diameter than the diameter of the axially remote portion 116c.

In one embodiment, the nut device 100 comprises a deformation measurement device. In one embodiment, the deformation measurement device comprises a strain gauge 117. A strain gauge is a device utilized to measure the amount of strain on an object by responding to deformation of the object. The measured strain can then be utilized to determine the amount of load (such as axial load) being applied. Non-limiting examples of the strain gauge include electro-resistance strain gauges and optical strain gauges. In the embodiment shown, the enlarged flanged portion 116a comprises an indent 116a' which receives the deformation measurement device (such as strain gauge 117).

It will be appreciated by the person skilled in the art that the nut device 100 may comprise one or more deformation measurement devices. In one embodiment, a deformation measurement device may be mounted about, or formed with, the axially remote portion. In this regard, each deformation measurement device can be used to more accurately measure the amount of deformation and thus force applied to the elongate fastening member. In this regard, the nut device may comprise one or more indents which each receive or are adapted to receive a deformation measurement device. Alternatively or additionally, the nut device may comprise one or more deformation measurement devices affixed or secured to the body.

In one embodiment, the female threads 118 have a first uniform pitch. The female threads 118 are adapted to cooperate with the male threads 122 of the elongate fastening member 120. In one embodiment, the male threads 122 have a second uniform pitch. In one embodiment, the first uniform pitch is different to the second uniform pitch. The male threads 122 are adapted to be in mating engagement with the female treads 118.

The difference in the first uniform pitch of the female threads 118 and the second uniform pitch of the male threads 122 allows for the deformation of the body (mentioned in more detail hereinafter) to be taken into account. In this regard, as the body 110 deforms due to tension loads, gaps formed between the female threads 118 and the male threads 122 are eliminated so that engagement occurs axially along the length of the male and female threads rather than only along a limited axial length thereof. As tension loads are applied, the mating engagement of the female threads and the male threads lengthens for an improved engagement. This action is discussed in detail in US patent No. 4,846,614.

In one embodiment, the nut device 100 may be used in conjunction with a load bearing member 150. In this regard, the nut device 100 applies force on the load bearing member 150 which in turn applies compressive force on the workpiece(s). In one embodiment, the load bearing member 150 comprises a washer.

FIG 1a shows a perspective view of the nut device 100 of FIG 1. As shown, the indent 116a' extends circumferentially around the enlarged flange portion 116a. Furthermore, the axially remote portion 116c may be provided as a hexagonal nut to assist with tightening and locating the nut around an elongate fastening member (not shown in FIG 1a) should the consumer desire to tighten the nut device. It should be noted that strain gauge 117 is not present in FIG 1a to clearly show the indent 116a'.

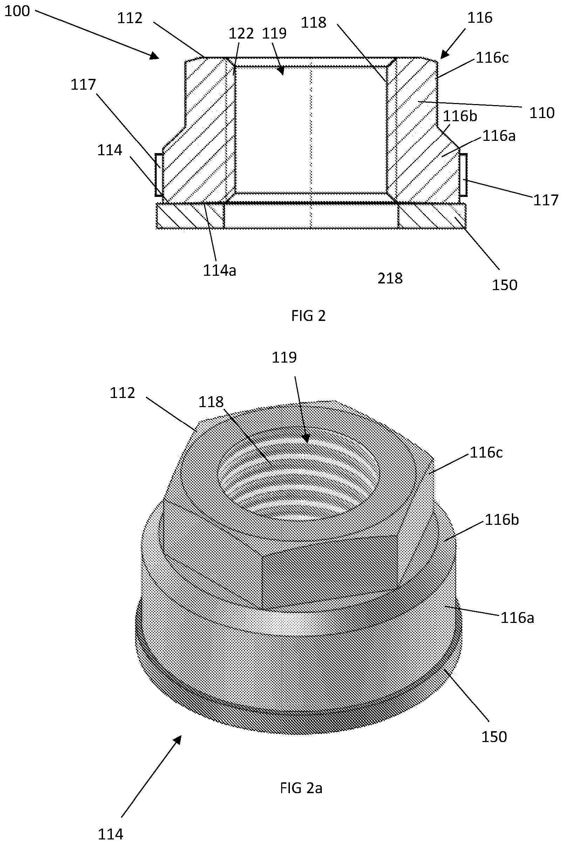

In an embodiment, such as that shown in FIG 2, the strain gauge 117 may be located on the outer wall 116. In this regard, the strain gauge 117 is suitably formed with the outer wall 116, such that the strain on the body 110, and thus the strain in elongate fastener 120, can be determined. In one embodiment, the strain gauge 117 may be formed with body 110. That is, the strain gauge 117 is affixed to, or formed with, the body 110. In one embodiment, the enlarged flange portion 116a comprises the strain gauge 117. For ease of description, FIG 2 has been numbered with the same reference numerals as FIG 1 and the description for FIG 1 equally applies to FIG 2. The difference between the nut device of FIG 2 and the nut device of FIG 1 is that the nut device of FIG 2 does not comprise an indent in the enlarged flange portion 116a, rather the strain gauged is formed with the nut device 100.

In one embodiment, the strain gauge 117 may be sputtered onto the outer wall 116. In one embodiment, the strain gauge 117 may comprise a measuring ring. The measuring ring measures the amount of deformation in the body and this can be utilized to determine the amount of tension.

FIG 2a shows a perspective view of the nut device of FIG 2. As shown, the axially remote portion 116c may be provided as a hexagonal nut to assist with tightening and locating the nut around an elongate fastening member (not shown in FIG 2a) should the consumer desire to tighten the nut device. It should be noted that strain gauge 117 is not present in FIG 2a to clearly show the enlarged flange portion 116a.

In use, the nut device may be utilized with an elongate fastening member. In one embodiment, the nut device is provided in combination with an elongate fastening member. In this regard, an elongate fastening member may be inserted through aligned apertures in one or more workpiece(s). The elongate fastening member may be formed with a head or body portion that can be tensioned (e.g., a multi jackbolt tensioner or fastener). The other end of the elongate fastening member may be fixed with the nut device of the present invention. By torqueing the multi jackbolt tensioner or fastener, a strong axial force is generated and directed against the workpiece(s). The thrust force of the jackbolts or head and the opposite reaction force of the nut device impose a strong clamping force on the workpiece(s).

In an embodiment, the body comprises an axial recess. In this embodiment, the deformation measurement device may be received or formed with the axial recess. In one embodiment, the deformation measurement device is permanently affixed or formed with the axial recess. The deformation measurement device in the axial recess can determine the deformation, and thus determine the force applied to the elongate fastening member.

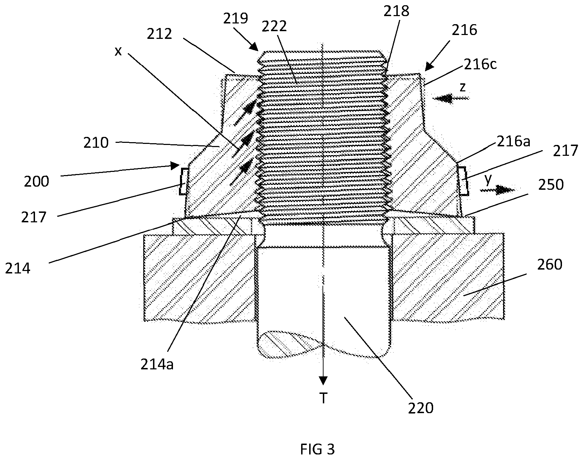

FIG 3 shows an enlarged view of an embodiment of a nut device 200, as tension is applied to an elongate fastening member 220. The nut device 200 comprises a body 210. The body 210 comprises a first surface 212 and second surface 214 connected by an outer wall 216 and by a central threaded aperture 219. The central treaded aperture 219 comprises female threads 218. The second surface 214 comprises a relief area 214a that extends from the outer wall 216 to the central threaded aperture 219. In this regard, the relief area 214a extends at least partially from the outer wall 216 to the central threaded aperture 219. The relief area 214a may have a frustoconical shape.

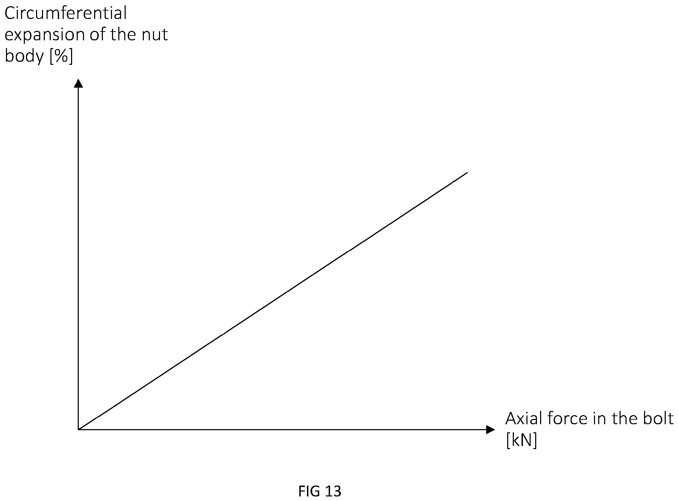

As tension is applied to the elongate fastening member 220, the nut device 200 is pulled against a load bearing member 250 and workpiece(s) under an equal and opposite resistance force. In one embodiment, the enlarged flange portion 216a is provided with an increased diameter to take up tensile stresses occurring in that part of the nut device 200 and the axially remote portion 216c is provided with a reduced transverse size so that the upper female threads can deflect but cannot move further than the lower female threads (relative to the workpieces). The force applied to the nut device 200 causes the body 210 to elastically deform or deflect. In this regard, the relief area 214a is pushed towards the workpieces such that the second surface 214 is in contact with the load bearing member 250, and this forces a deflection of the enlarged flange portion 216a outwardly. A seal is formed between the second surface 214 and the load bearing member 250, and also between the load bearing member 250 and the workpiece 260. The force also results in the axially remote portion 216c to deflect inwardly. The deflection (circumferential expansion) can be determined by the strain gauge 217 and the force being applied can be determined therefrom. In this regard, from tests, it appears that a direct linear correlation can be made between the body deformation and the elongate fastening member load. Physically, the circumference of the outer diameter of the nut body expands up to a less than a percent, proportionally with the increase of the axial bolt preload. Shown in FIG 13 is a graphical representation of this correlation.

FIG 3 depicts a nominal amount of deflection in the nut device 200. In this regard, when no or little tension is applied to the elongate fastening member 220 (e.g., by a MJT opposite the nut device 200), the nut device 200 experiences little to no deflection (shown in the complete lines). However, as tension is applied to the elongate fastening member 220, the nut device 200 is pulled against the load bearing member 250 and workpiece (arrows labelled 'x'), and the second surface 214 engages the load bearing member 250. Furthermore, the enlarged flange portion 216a deflects outwardly (as shown by arrows labelled 'y') from the elongate fastening member 220 and the axially remote portion 216c deflect towards the elongate fastening member 220 (as shown in the dotted lines, and as shown by arrows labelled 'z'). This also results the mating engagement of female threads 218 with the male threads 222. The provision of the relief area 214a allows for a seal to be formed between the load bearing member 250 and the second surface 214. Furthermore, the relief area 214a facilitates deflection of the body 210 of the nut device 200. In this regard, the provision of the relief area 214a allows for the deflection, when tension is applied to the elongate fastening member 220, to be more pronounced. One advantage of the pronounced deflection of the nut device 200 is that the ratio of deflection to determined force is larger. Furthermore, the provision of the relief area 214a alleviates the issue of buckling. As such, it is postulated that a more accurate relationship between the deflection observed and force applied can be determined. It will be appreciated that this is a significant advantage over the presently available force determination methods.

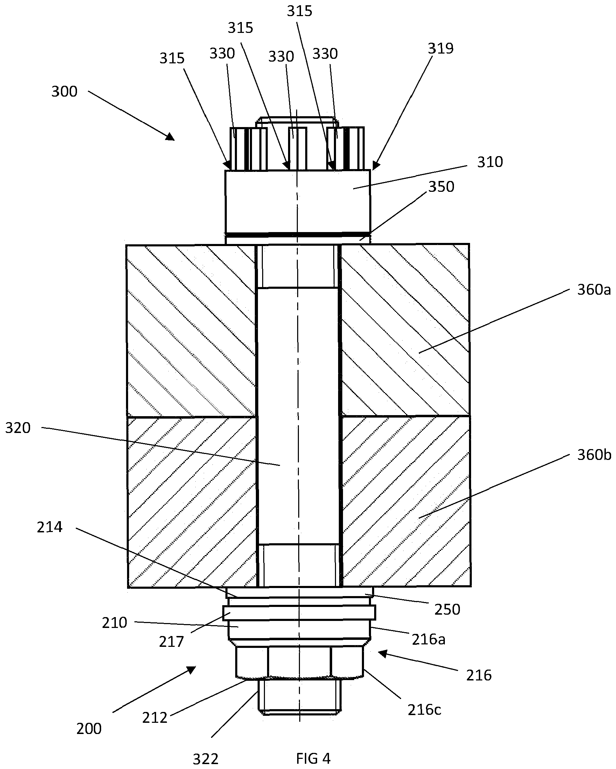

In one embodiment, the nut device of the present invention can be utilized with a multi jackbolt tensioner (MJT). In this regard, FIG 4 shows nut device 200 utilized with a multi jackbolt tensioner. MJT 300 comprises a body portion 310 formed to engage an elongate fastening member 320 or integrally formed therewith. In the embodiment shown, the body portion 310 is formed to engage the elongate fastening member 320. The body portion 310 comprises a plurality of holes 315 (shown with respective jackbolts 330 therein) spaced uniformly from a longitudinal central axis at spaced apart locations about an outer periphery thereof, each hole 315 has sidewalls formed with body threads, and each jackbolts 330 includes a body having threads to threadedly engage the body threads in a respective hole 315, in the body portion 310. A distal end of the elongate fastening member 320 comprises an externally threaded portion 322 such that the nut device 200 can be fastened thereto. As the jackbolts are tensioned, compressive forces are applied to the nut device 200 such that it is pulled against the load bearing member 250, and compressive force is applied to the workpiece(s) 360a, 360b. For completeness, it should be noted that the body portion 310 comprises a plurality of holes and respective jackbolts.

It should be noted that in the embodiment of FIG 4, the MJT 300 has been tensioned and the second surface 214 has deformed such that it is in contact with the load bearing member 250. This deformation is measured by strain gauge 217.

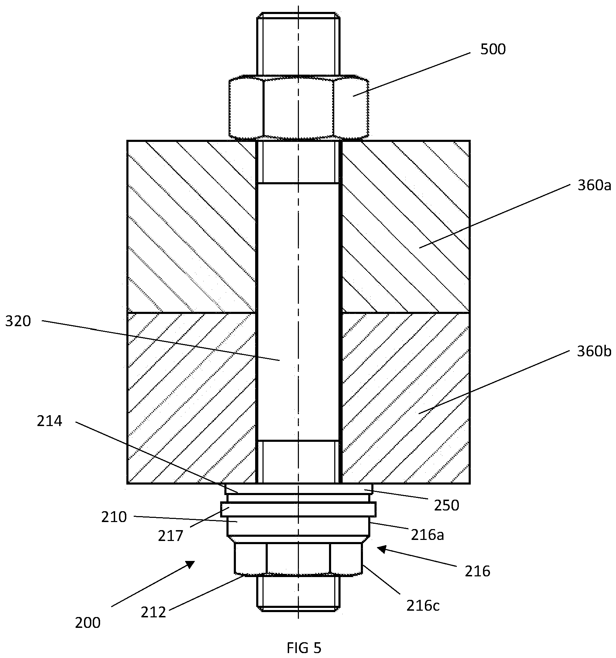

Referring to FIG 5, nut device 200 utilized with a nut 500. An elongate fastener 320 may be inserted through aligned apertures in a pair of workpieces 360a, 360b. In the embodiment shown, the elongate fastener 320 comprises male threaded ends. One end of the elongate fastener is coupled with nut device 200, and the other end is coupled with the nut 500. In the embodiment shown, the nut 500 is a hexagonal nut. As the nut 500 and/or nut device 200 is tensioned, compressive forces are applied to the nut device 200 such that it is pulled against the load bearing member 250, and compressive force is applied to the workpiece(s) 360a, 360b. It should be noted that in the embodiment of FIG 5, the nut 500 has been tensioned and the second surface 214 has deformed such that it is in contact with the load bearing member 250. This deformation is measured by strain gauge 217.

One advantage of the present nut device is that the deformation thereof can be utilized to more accurately determine the load on the elongate fastening member and workpiece(s). Another advantage of the present nut device is that the nut device is not required to be tightened directly, which provides more possibilities of use. In this regard, a consumer can access more joint configurations regardless of tightening method. Typically, the present nut device is used on a distal end of an elongate fastening member, and the generation of load can be completed on the opposite end to the nut device by torqueing a bolt head or jackbolts. As such, the present nut device allows monitoring and determining the load with tightening methods which include, but not limited to, conventional torque/turn tightening, stud stretching by heat, mechanical tensioning and hydraulic tensioning. This is a significant advantage as it allows for monitoring and determination of load with numerous tightening methodologies. Furthermore, the monitoring of the load on a distal end is generally much more accessible than monitoring the load at the location of torqueing. In this regard, it will be appreciated that space will be required to apply force thereto.

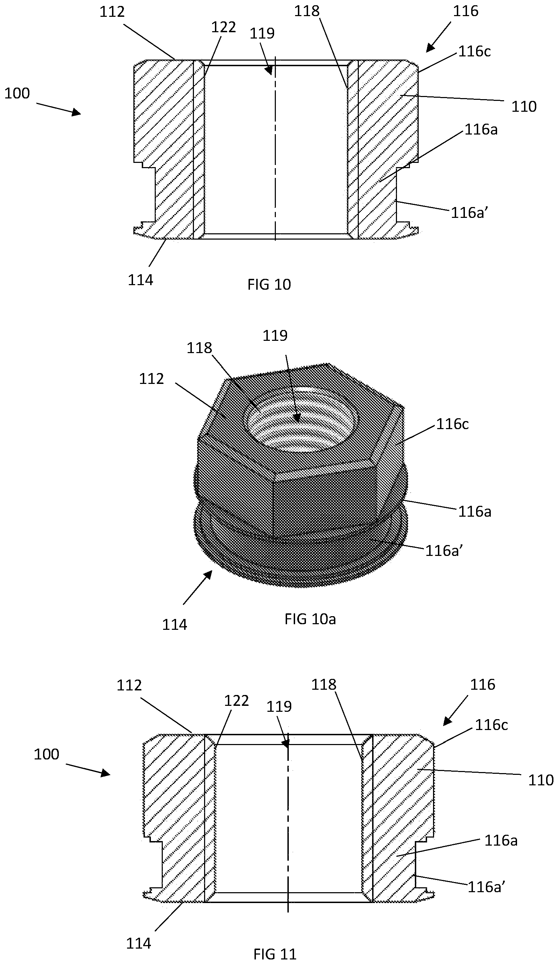

FIG 10 shows a similar embodiment of the nut device shown in FIG 1. FIG 10a shows a perspective view of the nut device shown in FIG 10. For ease of description, FIG 10 has been numbered with the same reference numerals as FIG 1 and the description for FIG 1 equally applies to FIG 10. The main difference between the nut device of FIG 10 and the nut device of FIG 1 is that the nut device of FIG 10 does not comprise transitional surface 116b. Furthermore, in this embodiment, the indent 116a' comprises a stepped profile.

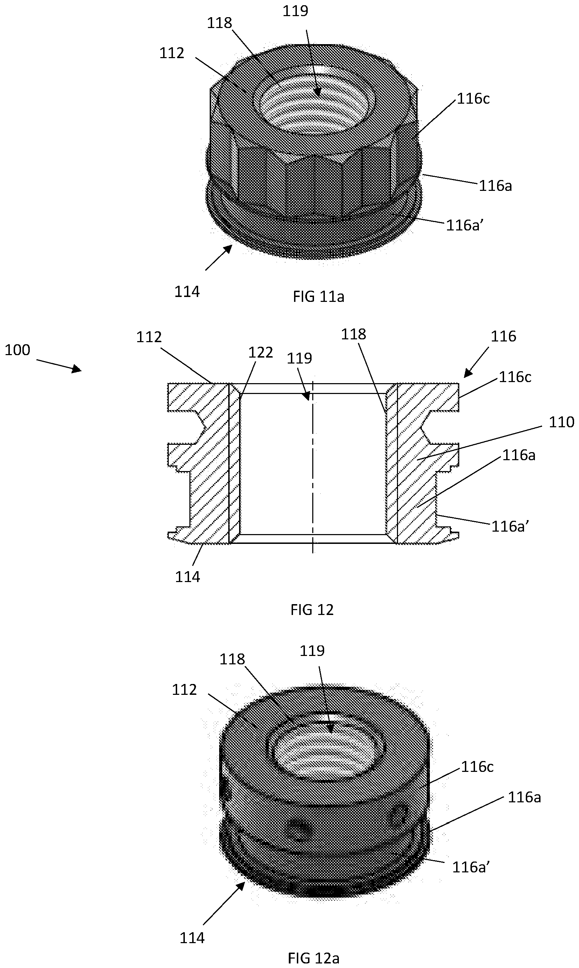

FIG 11 shows a similar embodiment of the nut device shown in FIG 10. FIG 11a shows a perspective view of the nut device shown in FIG 10. For ease of description, FIG 11 has been numbered with the same reference numerals as FIGs 1 and 10 and the description for FIGs 1 and 10 equally applies to FIG 11. The main difference between the nut device of FIG 11 and the nut device of FIG 1 is that the nut device of FIG 11 does not comprise transitional surface 116b. Furthermore, the indent 116a' comprises a stepped profile. Additionally, the axially remote portion 116c is adapted to receive a 12 point socket. The person skilled in the art will appreciate that axially remote portion 116c may be adapted to be complementary to a fastening tool, or may be adapted to receive a tool for assisting in fastening thereof.

FIG 12 shows a similar embodiment of the nut device shown in FIG 10. FIG 12a shows a perspective view of the nut device shown in FIG 12. For ease of description, FIG 12 has been numbered with the same reference numerals as FIGs 1 and 10 and the description for FIGs 1 and 10 equally applies to FIG 12. The main difference between the nut device of FIG 12 and the nut device of FIG 1 is that the nut device of FIG 11 does not comprise transitional surface 116b. Furthermore, the indent 116a' comprises a stepped profile. In this embodiment, the axially remote portion 116c further comprises a bore which is adapted accept a tool to assist in tensioning. In one embodiment, the bore is a blind hole.

The person skilled in the art will appreciate that the nut device of the present invention may be utilized in torquing applications and tensioning applications. In this regard, the present nut device may be utilized as an active or a reactive nut. In one embodiment, the invention resides in a nut device for use in torquing and/or tensioning applications. In an embodiment, the invention resides in a nut device when used in torquing and/or tensioning applications.

In one aspect, the invention resides in a method of determining a load applied to a fastening assembly comprising a fastener and a nut device, the method including:
providing a fastener comprising an elongate fastening member having a male threaded distal end;
fixing the nut device to the male threaded distal end, wherein the nut device comprises a body comprising a first surface and second surface connected by an outer wall and by a central threaded aperture with female threads, and a deformation measurement device being received or formed with the body;
optionally, locating the deformation measurement device around the body; and
tensioning the fastener and/or nut device;
determining the load applied to the elongate fastening member by:
   measuring deformation of the nut device transversely to an axial direction of the elongate fastening member, and
   determining the load applied to the elongate fastening member from the deformation of the nut device.

In one embodiment, the deformation measurement device comprises a strain gauge.

In an embodiment, the second surface comprises a relief area.

The fastener, nut device and components thereof may be substantially as described hereinabove.

In one embodiment, the fastener is a MJT.

It will be appreciated that the method may further include the step of measuring deformation of the nut device in a number of locations, and determining the load applied to the elongate fastening member.

In one embodiment, the invention resides in a MJT comprising:
a body portion 610 integrally formed with an elongate fastening member 620, the body portion 610 having a plurality of holes 615a, 615b spaced uniformly from a longitudinal central axis at spaced apart locations about an outer periphery thereof, the holes 615a, 615b having sidewalls formed with body threads;
jackbolts 630a, 630b each including a body having threads to threadedly engage the body threads in one of the holes 615a, 615b in the body portion 610;
a load bearing member 650 for applying force to a workpiece 660a to be fastened and arranged for locating about the elongate fastening member 620; and
a deformation measurement device being received or formed with the body 610.

In one embodiment, the deformation measurement device comprises a strain gauge.

The outer surface of the body may be adapted to receive a strain gauge. In this regard, the outer surface may comprise an indent that receives the strain gauge. In another embodiment, the strain gauge is in contact with the outer surface. In some embodiments, the strain gauge is formed with the body. That is, the strain gauge is affixed or formed with the outer surface.

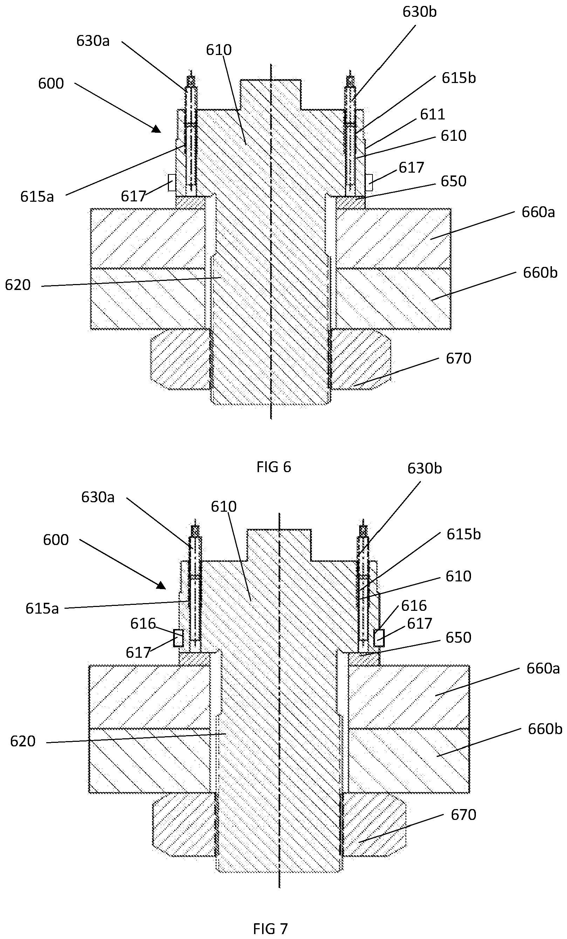

Shown in FIG 6 is a cross-section of a bolt-style MJT 600. A bolt-style MJT comprises a body 610 that is integrally formed with the elongate fastening member 620. The MJT 600 comprises a body portion 610. The body portion 610 comprises an outer surface 611. The body portion 610 is provided with a plurality of holes spaced uniformly from a longitudinal central axis at spaced apart locations about an outer periphery thereof. In the cross-section, the body portion 610 is shown as being provided with holes 615a, 615b. The holes 615a, 615b have sidewalls formed with body threads. Jackbolts 630a, 630b, each including a body having threads are placed in respective holes 615a, 615b to engage therewith. The person skilled in the art will appreciate that a MJT may have any number of holes and respective jackbolts and are not limited to the two shown in this cross section. In an embodiment, a load bearing member 650 is located between the body 610 and a workpiece. In the embodiment shown, a deformation measurement device is affixed or formed with the body 610. In one embodiment, the deformation device comprises a strain gauge 617.

In one embodiment, a fastening device 670 may be fixed with a threaded distal end of the elongate fastening member 620. In this embodiment, as tension is applied to the MJT 600, axial pressure is applied to the workpieces 660a, 660b. Furthermore, as tension is applied to the body 610 of MJT 600, the body 610 deforms and the strain gauge is able to detect and measure the deformation of the fastener and load being applied can be determined.

The fastening device 670 may be the device of the present invention or any fastening device known in the art. The use of the fastening device of the present invention allows for multiple deformation readings. These readings can be correlated to provide a more accurate force determination.

In an alternative embodiment, the threaded distal end of the elongate fastening member 620 may be engaged with a threaded bore in a workpiece(s). As tension is applied to the MJT 600, the body 610 applies axial pressure to the workpiece(s). It will be appreciated that the amount of torque applied can be monitored by the deformation of body 610, through the strain gauge 617.

Shown in FIG 7 is a cross section of a bolt-style MJT. The bolt-style MJT of FIG 7 is similar to the bolt-style MJT of FIG 6 with the exception that the body 610 comprises an indent 616 in the outer surface 611 thereof. The indent 616 is adapted to receive strain gauge 617. For ease of description, the same reference numerals for describing FIG 6 has been utilized for the MJT of FIG 7, the only difference being that the outer surface 611 comprises an indent 616 adapted for receiving a strain gauge 617. In one embodiment, the MJT is provided in combination with a strain gauge.

In one embodiment, the invention resides in a MJT comprising:
a body portion 610 formed to engage an elongate fastening member 620 or integrally formed therewith, the body portion 610 having a plurality of holes 615a, 615b spaced uniformly from a longitudinal central axis at spaced apart locations about an outer periphery thereof, the holes 615a, 615b having sidewalls formed with body threads;
jackbolts 630a, 630b each including a body having threads to threadedly engage the body threads in one of the holes in the body portion 610; and
a load bearing member 650 for applying force to a workpiece 660a to be fastened and arranged for locating about the elongate fastening member 620,
wherein the body 610 comprises a deformation measurement device in an axial recess formed therein.

The body comprises an axial recess in parallel or substantially parallel with the longitudinal central axis. The deformation measurement device may be retained, secured or affixed in the recess. The deformation measurement device may be utilized in determining the amount of deformation in the body and thus determine the amount of force being applied. In one embodiment, the deformation measurement device comprises a strain gauge.

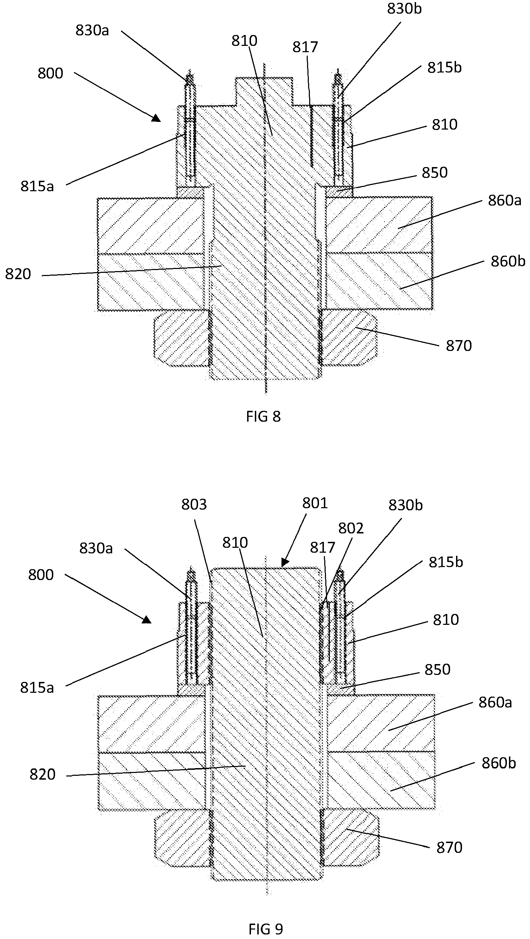

Shown in FIG 8 is a cross-section of a bolt-style MJT 800. The MJT 800 comprises a body portion 810. The body portion 810 is provided with a plurality of holes 815a, 815b spaced uniformly from a longitudinal central axis at spaced apart locations about an outer periphery thereof. In the cross-section, the body portion is shown as being provided with holes 815a, 815b. The holes 815a, 815b have sidewalls formed with body threads. Jackbolts 830a, 830b, each include a body having threads are placed in respective holes 815a, 815b to engage therewith. The person skilled in the art will appreciate that a MJT may have any number of holes and respective jackbolts and are not limited to the two shown in this cross section. In one embodiment, a load bearing member 850 is located between the body 810 and a workpiece. In the embodiment shown, a recess is formed in alignment of parallel to the longitudinal axis. The strain gauge 817 is retained, secured or affixed in said recess. In this embodiment, the body portion 810 is integrally formed with the elongate fastening member 820.

Shown in FIG 9 is a cross section of a nut-style MJT. The nut-style MJT is similar to the bolt-style MJT of FIG 8 with the exception that the nut-style MJT comprises a central treaded aperture 801 with female threads 802 adapted to engage male threads 803 of an elongate fastener 820. For ease of description, the same reference numerals for describing the MJT of FIG 8 has been utilized for FIG 9. The only difference being that the FIG 9 is a nut-style MJT rather than a bolt style MJT. In this embodiment, the body portion is formed to engage an elongate fastening member.

In one embodiment, the invention resides in a method for determining an applied load including the steps of:
providing a MJT comprising a body portion formed to engage an elongate fastening member or integrally formed therewith, the body portion having a plurality of holes spaced uniformly from a longitudinal central axis at spaced apart locations about an outer periphery thereof, the holes having sidewalls formed with body threads, jackbolts each including a body having threads to threadedly engage the body threads in one of the holes in the body portion, and a load bearing member for applying force to a workpiece to be fastened and arranged for locating about the elongate fastening member, wherein the body comprises an deformation measurement device in an axial recess formed therein, wherein the elongate fastening member comprises a threaded distal end;
fixing the threaded distal end into a threaded recess in a workpiece;
tensioning the MJT;
determining the load applied to the elongate fastening member by:
   measuring deformation of the MJT transversely to an axial direction of the elongate fastening member, and
determining the load applied to the elongate fastening member from the deformation of the fastener.

In one embodiment, the deformation measurement device comprises a strain gauge.

It will be appreciated that, where applicable, the nut device may be provided separately with the deformation measurement device (such as a strain gauge). In this regard, the consumer may locate a nut device on a fastener and subsequently place a deformation measurement device on said nut device.

In one embodiment, the invention resides in a nut device comprising:
a body having a central threaded aperture, the body comprising a first surface and second surface connected by an outer wall and threads of the central threaded aperture; and
wherein the body is adapted to receive a deformation measurement device.

In some embodiments, the second surface comprises a relief area.

In one embodiment, the outer wall comprises an indent. The indent receives the deformation measurement device. In one embodiment, the nut device is provided in conjunction with a deformation measurement device.

The above description of various embodiments of the present invention is provided for purposes of description to one of ordinary skill in the related art. It is not intended to be exhaustive or to limit the invention to a single disclosed embodiment. As mentioned above, numerous alternatives and variations to the present invention will be apparent to those skilled in the art of the above teaching. Accordingly, while some alternative embodiments have been discussed specifically, other embodiments will be apparent or relatively easily developed by those of ordinary skill in the art. Accordingly, this invention is intended to embrace all alternatives, modifications and variations of the present invention that have been discussed herein, and other embodiments that fall within the scope of the claims.

## Claims

1. A nut device (100, 200) comprising:
a body (110, 210) comprising a first surface (112, 212) and second surface (114, 214) connected by an outer wall (116, 216) and by a central threaded aperture (119, 219) with female threads (118, 218) for engaging an elongate fastening member (220); and
a deformation measurement device being received or formed with the body (110, 210), **characterised in that** the deformation measurement device is located circumferentially about the body (110, 210).

2. A fastening assembly for determining an applied load comprising:
a fastener comprising an elongate fastening member (220) having a male threaded distal end; and
a nut device (100, 200) having a body (110, 210) comprising a first surface (112, 212) and second surface (114, 214) connected by an outer wall (116, 216) and by a central threaded aperture (119, 219) with female threads (118, 218) for engaging the elongate fastening member (220), and a deformation measurement device adapted to measure deformation of the body (110, 210) and determine the load applied, the deformation measurement device being received or formed with the body (110, 210), wherein the deformation measurement device is located circumferentially about the body (110, 210);
whereby tensioning of the fastener causes the deformation of the body.

3. A method of determining a load applied to a fastening assembly a method of determining a load applied to a fastening assembly comprising a fastener and a nut device (100, 200), the method including:
providing a fastener comprising an elongate fastening member (220) having a male threaded distal end;
fixing the nut device (100, 200) to the male threaded distal end, wherein the nut device (100, 200) having a body (110, 20) comprising a first surface (112, 212) and second surface (114, 214) connected by an outer wall (116, 216) and by a central threaded aperture (119, 219) with female threads (118, 218), and a deformation measurement device being received or formed with the body (110, 210), wherein the deformation measurement device is located circumferentially about the body (110, 210);
optionally, locating the deformation measurement device around the body (110, 210); and
tensioning the fastener and/or nut device (100, 200);
determining the load applied to the elongate fastening member (200) by:
measuring deformation of the nut device (100, 200) transversely to an axial direction of the elongate fastening member (220), and
determining the load applied to the elongate fastening member (220) from the deformation of the nut device (100, 200).

4. The nut device (100, 200), fastening assembly or method of any one of the preceding claims, wherein the second surface (114, 214) comprises a relief area (114a, 214a).

5. The nut device (100, 200), fastening assembly or method of claim 4, wherein the relief area (114a, 214a) extends at least partially from the outer wall (116, 216) to the central treaded aperture (119, 219).

6. The nut device (100, 200), fastening assembly or method of any one of claims 4 to 5, wherein the relief area (114a, 214a) extends from the outer wall (116, 216) to the central treaded aperture (119, 219)..

7. The nut device (100, 200), fastening assembly or method of any one of claims 4 to 6, wherein the relief area (114a, 214a) has a frustoconical shape.

8. The nut device (100, 200), fastening assembly or method of any one of the preceding claims, wherein the outer wall (116, 216) comprises an enlarged flange portion (116a, 216a) adjacent the second surface, an axially remote portion (116c, 216c) adjacent the first surface (114, 214), and optionally a transitional surface (116b, 216b) connecting the enlarged flange portion (116a, 216a) and the axially remote portion (116c, 216c).

9. The nut device (100, 200), fastening assembly or method of any one of the preceding claims, wherein the outer wall (116) comprises an indent (116a') that receives the deformation measurement device.

10. The nut device (100, 200), fastening assembly or method of claim 8, wherein the enlarged flange portion (116a) comprises the indent (116a).

11. The nut device (100, 200), fastening assembly or method of any one of claims 1 to 8, wherein the deformation measurement device is formed with the body (110, 210).

12. The nut device (100, 200), fastening assembly or method of any one of the preceding claims, wherein the female threads (118, 218) have a first uniform pitch, a male threaded portion of the elongate fastener (220) has a second uniform pitch, and wherein the second uniform pitch and the first uniform pitch are different.

13. The nut device (100, 200), fastening assembly or method of any one of claims 1 to 3, wherein the second surface is substantially planar.

14. The nut device (100, 200), fastening assembly or method of any one of claims 1 to 13, wherein the deformation measurement device measures the circumferential expansion of the body (110, 210).

## Patentansprüche

1. Mutternvorrichtung (100, 200), umfassend:
einen Körper (110, 210), umfassend eine erste Oberfläche (112, 212) und eine zweite Oberfläche (114, 214), die durch eine Außenwand (116, 216) und durch eine zentrale Gewindeöffnung (119, 219) mit Innengewinde (118, 218) zum Ineingriffnehmen eines länglichen Befestigungselements (220) verbunden sind; und
eine Verformungsmessvorrichtung, die mit dem Körper (110, 210) aufgenommen oder mit diesem ausgebildet ist, **dadurch gekennzeichnet, dass** die Verformungsmessvorrichtung kreisförmig um den Körper (110, 210) herum lokalisiert ist.

2. Befestigungsanordnung zum Bestimmen einer ausgeübten Last, umfassend:
einen Befestiger, umfassend ein längliches Befestigungselement (220), das ein distales Ende mit Außengewinde aufweist; und
eine Mutternvorrichtung (100, 200), die einen Körper (110, 210) aufweist, umfassend eine erste Oberfläche (112, 212) und eine zweite Oberfläche (114, 214), die durch eine Außenwand (116, 216) und durch eine zentrale Gewindeöffnung (119, 219) mit Innengewinden (118, 218) zum Ineingriffnehmen des länglichen Befestigungselements (220) verbunden sind, und eine Verformungsmessvorrichtung, die angepasst ist, um eine Verformung des Körpers (110, 210) zu messen und die ausgeübte Last zu bestimmen, wobei die Verformungsmessvorrichtung mit dem Körper (110, 210) aufgenommen oder mit diesem ausgebildet ist, wobei die Verformungsmessvorrichtung kreisförmig um den Körper (110, 210) herum lokalisiert ist;
wobei ein Spannen des Befestigers eine Verformung des Körpers bewirkt.

3. Verfahren zum Bestimmen einer ausgeübten Last auf eine Befestigungsanordnung, das Verfahren zum Bestimmen einer ausgeübten Last auf eine Befestigungsanordnung umfassend einen Befestiger und eine Mutternvorrichtung (100, 200), wobei das Verfahren einschließt:
Bereitstellen eines Befestigers, umfassend ein längliches Befestigungselement (220), das ein distales Ende mit Außengewinde aufweist;
Befestigen der Mutternvorrichtung (100, 200) an dem distalen Ende mit Außengewinde, wobei die Mutternvorrichtung (100, 200) einen Körper (110, 20) aufweist, umfassend eine erste Oberfläche (112, 212) und eine zweite Oberfläche (114, 214), die durch eine Außenwand (116, 216) und durch eine zentrale Gewindeöffnung (119, 219) mit Innengewinden (118, 218) verbunden sind, und wobei eine Verformungsmessvorrichtung in dem Körper (110, 210) aufgenommen oder mit diesem ausgebildet ist, wobei die Verformungsmessvorrichtung kreisförmig um den Körper (110, 210) herum lokalisiert ist;
optionales Lokalisieren der Verformungsmessvorrichtung um den Körper (110, 210) herum; und
Spannen des Befestigers und/oder der Mutternvorrichtung (100, 200);
Bestimmen der ausgeübten Last auf das längliche Befestigungselement (200) durch:
Messen der Verformung der Mutternvorrichtung (100, 200) quer zu einer axialen Richtung des länglichen Befestigungselements (220), und
Bestimmen der ausgeübten Last auf das längliche Befestigungselement (220) von der Verformung der Mutternvorrichtung (100, 200).

4. Mutternvorrichtung (100, 200), Befestigungsanordnung oder Verfahren nach einem der vorstehenden Ansprüche, wobei die zweite Oberfläche (114, 214) einen Entlastungsbereich (114a, 214a) umfasst.

5. Mutternvorrichtung (100, 200), Befestigungsanordnung oder Verfahren nach Anspruch 4, wobei sich der Entlastungsbereich (114a, 214a) mindestens teilweise von der Außenwand (116, 216) zu der zentralen Gewindeöffnung (119, 219) erstreckt.

6. Mutternvorrichtung (100, 200), Befestigungsanordnung oder Verfahren nach einem der Ansprüche 4 bis 5, wobei sich der Entlastungsbereich (114a, 214a) von der Außenwand (116, 216) zu der zentralen Gewindeöffnung (119, 219) erstreckt.

7. Mutternvorrichtung (100, 200), Befestigungsanordnung oder Verfahren nach einem der Ansprüche 4 bis 6, wobei der Entlastungsbereich (114a, 214a) eine kegelstumpfförmige Form aufweist.

8. Mutternvorrichtung (100, 200), Befestigungsanordnung oder Verfahren nach einem der vorstehenden Ansprüche, wobei die Außenwand (116, 216) einen vergrößerten Flanschabschnitt (116a, 216a) angrenzend an die zweite Oberfläche, einen axial entfernten Abschnitt (116c, 216c) angrenzend an die erste Oberfläche (114, 214) und optional eine Übergangsoberfläche (116b, 216b) umfasst, die den vergrößerten Flanschabschnitt (116a, 216a) und den axial entfernten Abschnitt (116c, 216c) verbindet.

9. Mutternvorrichtung (100, 200), Befestigungsanordnung oder Verfahren nach einem der vorstehenden Ansprüche, wobei die Außenwand (116) eine Vertiefung (116a') umfasst, die die Verformungsmessvorrichtung aufnimmt.

10. Mutternvorrichtung (100, 200), Befestigungsanordnung oder Verfahren nach Anspruch 8, wobei der vergrößerte Flanschabschnitt (116a) die Vertiefung (116a) umfasst.

11. Mutternvorrichtung (100, 200), Befestigungsanordnung oder Verfahren nach einem der Ansprüche 1 bis 8, wobei die Verformungsmessvorrichtung mit dem Körper (110, 210) ausgebildet ist.

12. Mutternvorrichtung (100, 200), Befestigungsanordnung oder Verfahren nach einem der vorstehenden Ansprüche, wobei die Innengewinde (118, 218) eine erste gleichmäßige Steigung aufweisen, ein Außengewindeabschnitt des länglichen Befestigers (220) eine zweite gleichmäßige Steigung aufweist und wobei die zweite gleichmäßige Steigung und die erste gleichmäßige Steigung unterschiedlich sind.

13. Mutternvorrichtung (100, 200), Befestigungsanordnung oder Verfahren nach einem der Ansprüche 1 bis 3, wobei die zweite Oberfläche im Wesentlichen eben ist.

14. Mutternvorrichtung (100, 200), Befestigungsanordnung oder Verfahren nach einem der Ansprüche 1 bis 13, wobei die Verformungsmessvorrichtung die Umfangsausdehnung des Körpers (110, 210) misst.

## Revendications

1. Dispositif d'écrou (100, 200) comprenant :
un corps (110, 210) comprenant une première surface (112, 212) et une seconde surface (114, 214) reliées par une paroi externe (116, 216) et par une ouverture filetée centrale (119, 219) avec des filetages femelles (118, 218) destinées à venir en prise avec un élément de fixation allongé (220) ; et
un dispositif de mesure de déformation reçu ou formé avec le corps (110, 210), **caractérisé en ce que** le dispositif de mesure de déformation est situé circonférentiellement autour du corps (110, 210).

2. Ensemble de fixation destiné à déterminer une charge appliquée comprenant :
une fixation comprenant un élément de fixation allongé (220) ayant une extrémité distale à filetage mâle ; et
un dispositif d'écrou (100, 200) ayant un corps (110, 210) comprenant une première surface (112, 212) et une seconde surface (114, 214) reliées par une paroi externe (116, 216) et par une ouverture filetée centrale (119, 219) avec des filetages femelles (118, 218) destinées à venir en prise avec l'élément de fixation allongé (220), et un dispositif de mesure de déformation conçu pour mesurer une déformation du corps (110, 210) et déterminer la charge appliquée, le dispositif de mesure de déformation étant reçu ou formé avec le corps (110, 210), dans lequel le dispositif de mesure de déformation est situé circonférentiellement autour du corps (110, 210) ;
moyennant quoi la tension de la fixation entraîne la déformation du corps.

3. Procédé de détermination d'une charge appliquée à un ensemble de fixation procédé de détermination d'une charge appliquée à un ensemble de fixation comprenant une fixation et un dispositif d'écrou (100, 200), le procédé comportant :
la fourniture d'une fixation comprenant un élément de fixation allongé (220) ayant une extrémité distale à filetage mâle ;
la fixation du dispositif d'écrou (100, 200) à l'extrémité distale à filetage mâle, dans lequel le dispositif d'écrou (100, 200) ayant un corps (110, 20) comprenant une première surface (112, 212) et une seconde surface (114, 214) reliées par une paroi externe (116, 216) et par une ouverture filetée centrale (119, 219) avec des filetages femelles (118, 218), et un dispositif de mesure de déformation reçu ou formé avec le corps (110, 210), dans lequel le dispositif de mesure de déformation est situé circonférentiellement autour du corps (110, 210) ;
éventuellement, la localisation du dispositif de mesure de déformation autour du corps (110, 210) ; et
la mise en tension de la fixation et/ou du dispositif d'écrou (100, 200) ;
la détermination de la charge appliquée à l'élément de fixation allongé (200) par :
la mesure d'une déformation du dispositif d'écrou (100, 200) de manière transversale à une direction axiale de l'élément de fixation allongé (220), et
la détermination de la charge appliquée à l'élément de fixation allongé (220) à partir de la déformation du dispositif d'écrou (100, 200).

4. Dispositif d'écrou (100, 200), ensemble de fixation ou procédé selon l'une quelconque des revendications précédentes, dans lequel la seconde surface (114, 214) comprend une zone en relief (114a, 214a).

5. Dispositif d'écrou (100, 200), ensemble de fixation ou procédé selon la revendication 4, dans lequel la zone en relief (114a, 214a) s'étend au moins partiellement à partir de la paroi externe (116, 216) vers l'ouverture filetée centrale (119, 219).

6. Dispositif d'écrou (100, 200), ensemble de fixation ou procédé selon l'une quelconque des revendications 4 à 5, dans lequel la zone en relief (114a, 214a) s'étend à partir de la paroi externe (116, 216) vers l'ouverture filetée centrale (119, 219).

7. Dispositif d'écrou (100, 200), ensemble de fixation ou procédé selon l'une quelconque des revendications 4 à 6, dans lequel la zone en relief (114a, 214a) a une forme tronconique.

8. Dispositif d'écrou (100, 200), ensemble de fixation ou procédé selon l'une quelconque des revendications précédentes, dans lequel la paroi externe (116, 216) comprend une partie de bride élargie (116a, 216a) adjacente à la seconde surface, une partie axialement distante (116c, 216c) adjacente à la première surface (114, 214), et éventuellement une surface de transition (116b, 216b) reliant la partie de bride élargie (116a, 216a) et la partie axialement distante (116c, 216c).

9. Dispositif d'écrou (100, 200), ensemble de fixation ou procédé selon l'une quelconque des revendications précédentes, dans lequel la paroi externe (116) comprend un creux (116a') qui reçoit le dispositif de mesure de déformation.

10. Dispositif d'écrou (100, 200), ensemble de fixation ou procédé selon la revendication 8, dans lequel la partie de bride élargie (116a) comprend le creux (116a).

11. Dispositif d'écrou (100, 200), ensemble de fixation ou procédé selon l'une quelconque des revendications 1 à 8, dans lequel le dispositif de mesure de déformation est formé avec le corps (110, 210).

12. Dispositif d'écrou (100, 200), ensemble de fixation ou procédé selon l'une quelconque des revendications précédentes, dans lequel les filetages femelles (118, 218) ont un premier pas uniforme, une partie à filetage mâle de la fixation allongée (220) a un second pas uniforme, et dans lequel le second pas uniforme et le premier pas uniforme sont différents.

13. Dispositif d'écrou (100, 200), ensemble de fixation ou procédé selon l'une quelconque des revendications 1 à 3, dans lequel la seconde surface est sensiblement plane.

14. Dispositif d'écrou (100, 200), ensemble de fixation ou procédé selon l'une quelconque des revendications 1 à 13, dans lequel le dispositif de mesure de déformation mesure l'expansion circonférentielle du corps (110, 210).
